# FASCICULE DE BREVET EUROPEEN

(11) **EP 3 811 115 B1**
(45) Date de publication et mention de la délivrance du brevet: **24.05.2023**
(21) Numéro de dépôt: 19742641.4
(22) Date de dépôt: 17.06.2019
(51) Int. Cl.: G01S 17/93, G01S 17/87

(54) **VEHICULE AUTOMOBILE EQUIPE DE CAPTEURS ANTICOLLISIONS**
MIT ANTIKOLLISIONSSENSOREN AUSGESTATTETES KRAFTFAHRZEUG
MOTOR VEHICLE PROVIDED WITH ANTICOLLISION SENSORS

(30) Priorité: 20.06.2018 FR 1855424
(43) Date de publication de la demande: 28.04.2021
(73) Titulaire: PSA Automobiles SA, 78300 Poissy (FR); Easymile, 31000 Toulouse (FR)
(72) Inventeur: CAMPANELLA, Thierry, 91310 Linas (FR); HILLAIRET, Blandine, 92500 Rueil Malmaison (FR); ETCHEVERRY, Celine, 91370 Verrieres Le Buisson (FR); SCESA, Vincent, 31190 Miremont (FR)
(86) Numéro de dépôt international: PCT/FR2019/051458
(87) Numéro de publication internationale: WO 2019/243718

(56) Documents cités:
- EP-A1- 3 081 959
- WO-A1-2017/060977
- US-A1- 2018 059 662
- US-A1- 2018 136 644
- JO KICHUN ET AL: "Development of Autonomous Car-Part II: A Case Study on the Implementation of an Autonomous Driving System Based on Distributed Architec", IEEE TRANSACTIONS ON INDUSTRIAL ELECTRONICS, IEEE SERVICE CENTER, PISCATAWAY, NJ, USA, vol. 62, no. 8, 1 août 2015 (2015-08-01), pages 5119-5132, XP011585875, ISSN: 0278-0046, DOI: 10.1109/TIE.2015.2410258 [extrait le 2015-06-26]

## Description

La présente invention concerne de manière générale les capteurs anticollisions et se rapporte plus particulièrement à l'implantation de ces capteurs dans les véhicules dotés d'une fonction de conduite autonome, et en particulier une navette autonome.

Il est connu d'implanter des capteurs sur un véhicule automobile afin de détecter l'imminence d'une collision avec un véhicule tiers ou une partie d'infrastructure.

Parmi les capteurs les plus souvent utilisés dans le domaine automobile, on trouve notamment les lidars anticollisions. Ces lidars sont disposés respectivement aux quatre angles du véhicule automobile.

Le document WO2017060977 divulgue un dispositif de traitement d'informations comprenant une pluralité d'unités de transmission/réception de lumière et une unité de traitement d'informations. Chacune des unités de transmission/réception de lumière comprend une unité d'émission qui émet une lumière, une unité de balayage qui balaye la lumière émise par l'unité d'émission, et une unité de réception de lumière qui reçoit la lumière réfléchie par un objet

Le document US 2018059662 divulgue un système de commande pour un véhicule à conduite autonome comprend un dispositif de fourniture d'informations 10 configuré pour fournir à un conducteur des informations et une partie de demande d'opération configurée pour contrôler le dispositif de fourniture d'informations afin de fournir au conducteur des informations pendant la conduite autonome afin de demander ainsi une opération prédéterminée. au conducteur. La partie demande d'opération est dotée d'une partie calcul de temps de marge configurée pour calculer un temps de marge jusqu'à un moment auquel le conducteur doit commencer l'opération lorsque l'opération doit être demandée au conducteur et une partie de contrôle de fourniture d'informations configurée pour fournir au conducteur informations différentes selon le temps de marge.

Le document EP3081959 divulgue un procédé pour déterminer une position de montage respective d'au moins deux capteurs d'un véhicule automobile autonome.

Le document US2018136644 divulgue un système, un appareil ou un processus peut être configuré pour mettre en oeuvre une application qui applique des techniques d'intelligence artificielle et/ou d'apprentissage automatique pour prédire un plan d'action optimal (ou un sous-ensemble de plans d'action) pour un système de véhicule autonome (par exemple, un ou plusieurs planificateurs d'un véhicule autonome, un simulateur ou un téléopérateur) à entreprendre en fonction des performances sous-optimales du véhicule autonome et/ou des modifications des données détectées des capteurs (par exemple, nouveaux bâtiments, points de repère, nids-de-poule, etc.).

Le document JO KICHUN ET AL : « Development of Autonomous Car-Part II : A Case Study on the Implementation of an Autonomous Driving System Based on the Distributed Architec » divulgue un procédé de développement d'un véhicule autonome fondé sur un système d'architecture distribué.

Un lidar, acronyme signifiant « light, ou laser, detecting and ranging », est un système optoélectronique comportant un émetteur de faisceau laser, un récepteur comprenant un collecteur de lumière et un photo détecteur qui transforme la lumière en un signal électrique ainsi qu'une chaine électronique de traitement du signal qui extrait l'information recherchée.

De tels capteurs utilisent un faisceau laser pour déterminer la distance qui les séparent des objets présents dans l'environnement du véhicule porteur (sous-entendu le véhicule équipé, « porteur » desdits capteurs). Ils permettent de détecter les obstacles dangereux à proximité du véhicule porteur. Ils font partie du début de la chaine de sécurité pour déclencher des freinages d'urgence dans le cas où un obstacle dangereux serait très proche du véhicule porteur.

Ils sont également utilisés pour permettre des ralentissements plus doux, progressifs, lorsque des obstacles considérés comme dangereux, sont perçus sur la trajectoire du véhicule porteur suffisamment à l'avance.

Le mode de réalisation décrit dans la présente invention considère plus particulièrement des lidars de type LMS-151 commercialisés par la société Sick, qui sont disposés aux quatre angles du véhicule porteur généralement à 300 mm du sol.

Ces capteurs permettent de respecter un certain nombre de contraintes, parmi lesquelles :
- l'angle d'ouverture en vertical, considéré centré par rapport au plan médian horizontal du capteur, est de 1° ;
- l'angle d'ouverture en horizontal considéré dans le plan médian du capteur et dont l'origine correspond au centre physique du capteur, est de 270°;
- le plan de détection des capteurs est parallèle à la route ;
- les capteurs sont positionnés à l'extérieur du « gabarit » du véhicule (en dehors de l'encombrement maximum de la caisse du véhicule afin de balayer l'avant du véhicule et ses flancs). Cela implique que le centre « physique » de chaque capteur est dégagé des flancs du véhicule (et idéalement du déport des roues avant lorsqu'elles sont braquées) d'un minimum de 2 cm ; et
- les surfaces de détection (ou zones de détection) se chevauchent pour créer des zones de redondance afin de pallier la défaillance d'un capteur.

Le respect de ces contraintes impose de disposer les capteurs en dehors du gabarit du véhicule : ils débordent donc de l'encombrement maximum du véhicule. Ils sont dits « en déport » du gabarit du véhicule.

De tels débordements ou déports, sont potentiellement dangereux et ne sont donc pas acceptables pour un véhicule automobile qui est amené à circuler essentiellement dans un environnement piétonnier comme c'est le cas, notamment, d'une navette autonome amenée à se déplacer au sein d'un site industriel ou d'un espace urbain à forte concentration piétonnière. D'autre part, les capteurs sont naturellement plus exposés à la casse en cas de collision avec des obstacles.

L'invention a notamment pour but de trouver un compromis dans l'implantation des capteurs sur le véhicule permettant d'assurer à la fois une détection d'obstacle indispensable à la sécurité des piétons et un débordement réduit des capteurs par rapport au gabarit du véhicule pour réduire le risque de casse matérielle.

A cet effet, elle propose un véhicule automobile équipé d'au moins quatre capteurs anticollisions, identiques, de type lidar, disposés respectivement aux quatre angles du véhicule, chaque capteur possédant un même angle d'ouverture déterminé et définissant au moins une zone de détection autour du véhicule, certaines zones de détection pouvant se chevaucher pour créer de la redondance, caractérisé en ce que les deux capteurs avant gauche et droit sont positionnés et orientés de manière à ce que leurs zones de détection tangentent le déport des roues respectivement avant gauche et droite, en considérant l'angle maximal de braquage des roues avant gauche et droite, et en ce que les deux capteurs arrière gauche et droit définissent des zones de détection, sans chevauchement avec d'autres zones de détection, sur les flancs respectivement gauche et droit du véhicule ; les zones de détection sans chevauchement tangentant le déport des roues avant gauche et droite en considérant leur angle de braquage maximal et dans lequel les capteurs arrière gauche et droit sont positionnés à l'arrière du véhicule de telle manière que leurs centres sont en limite du gabarit du véhicule.

Selon une caractéristique, les capteurs avant gauche et droit sont positionnés à l'avant du véhicule de telle manière que leurs centres sont en retrait des flancs respectivement gauche et droit du véhicule, vers l'axe longitudinal du véhicule.

Selon d'autres caractéristiques, le gabarit du véhicule présente, vue de dessus, une forme générale rectangulaire, les capteurs arrière gauche et droit sont positionnés aux angles du rectangle correspondant aux angles arrière gauche et droit du véhicule, et les capteurs avant gauche et droit sont positionné à distance des deux autres angles du rectangle se faisant face.

Selon encore une autre caractéristique, il n'y a pas de dépassement latéral des capteurs par rapport au gabarit du véhicule considéré avec les rétroviseurs extérieurs gauche et droit déployés.

Selon une autre caractéristique, le véhicule tel que décrit précédemment, est une navette autonome.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue de dessus d'un véhicule selon l'invention illustrant l'implantation de quatre capteurs d'angle de type lidar ; et
- la figure 2 est la même vue de dessus que la figure 1 sur laquelle sont représentées les zones de détection scrutées par les quatre capteurs d'angle.

Sur les figures, les éléments identiques sont repérés par les mêmes signes de référence.

Le véhicule est représenté dans un repère bidimensionnel XY.

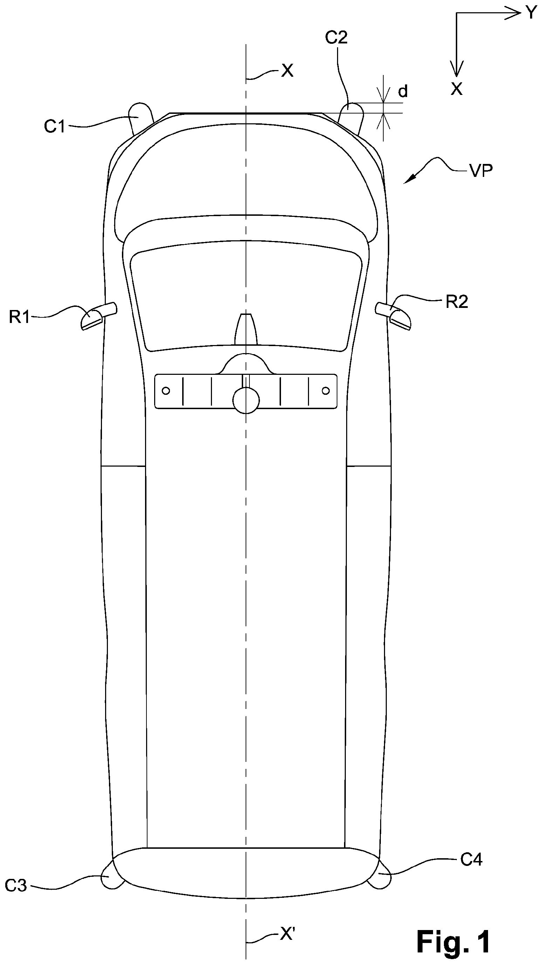

La figure 1 illustre un véhicule porteur VP vu de dessus, par exemple un véhicule utilitaire léger série de type Citroën Jumpy ou Peugeot Expert ou leurs versions en véhicules particuliers respectivement Space Tourer et Traveller.

Les capteurs C1 à C4 sont implantés aux quatre angles du véhicule porteur VP, dont la forme générale, vue de dessus peut s'apparenter à un rectangle.

Dans l'implantation considérée dans la présente invention, le déport d des capteurs avant gauche et droit C1 et C2 est de seulement 60 mm dans la zone avant du véhicule porteur VP et il n'y a pas ou quasiment pas de dépassement latéral des capteurs C1 à C4 par rapport au gabarit du véhicule porteur VP avec les rétroviseurs extérieurs gauche et droit R1 et R2 déployés.

Les capteurs C1 à C4 sont des lidars identiques du type précité LMS-151.

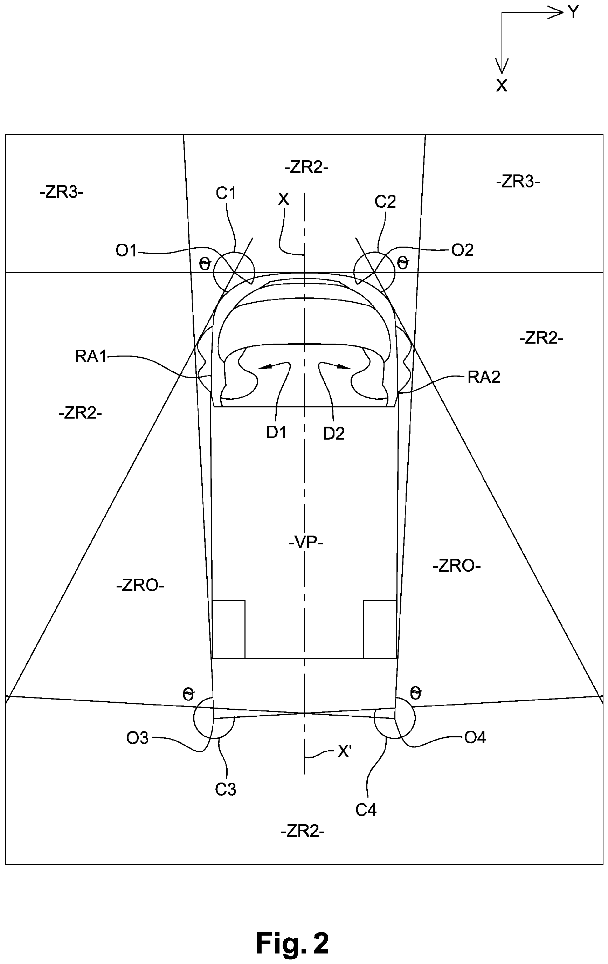

En référence à la figure 2, les capteurs C1 à C4 sont implantés de manière à ce que leurs angles d'ouverture en horizontal, couvrent au moins tout l'environnement proche du véhicule porteur VP avec des zones de détection dont certaines peuvent se chevaucher. De telles zones sont appelées également « zones de redondance ». Ces zones de redondance, indispensables pour pallier aux défaillances d'un des capteurs C1 à C4, peuvent être double ZR2 (chevauchement de zones de détections scrutées par deux capteurs) voire triple ZR3 (chevauchement de zones de détections scrutées par trois capteurs)

Pour limiter un déport trop important des capteurs C1 à C4 par rapport au gabarit du véhicule porteur VP la présente invention considère qu'une redondance pour certaines zones de détection n'est pas réellement indispensable. C'est le cas notamment pour les zones ZR0 correspondant aux côtés (ou flancs) gauche et droit du véhicule porteur VP.

En effet, en cas de défaillance d'un capteur C1 à C4, le véhicule porteur VP est programmé pour s'arrêter. Ainsi, sur les côtés ou flancs gauche et droit du véhicule porteur VP, une simple détection sans redondance (ZRO) est acceptable.

Pour répondre aux contraintes mentionnées ci-dessus avec les conditions sur la redondance considérées dans le cadre de la présente invention, les capteurs des angles avant gauche et droit C1 et C2 sont implantés sur le véhicule porteur VP en étant davantage rapprochés de la face avant du véhicule et du centre du véhicule porteur VP et avec orientation précise déterminée de leur angle d'ouverture.

L'orientation des capteurs C1 à C4 est déterminée de telle manière que leurs zones de détection tangentent le débattement D1 et D2 des roues avant gauche et droite RA1 et RA2 braquées avec leur angle de braquage maximum.

Comme indiqué précédemment, les capteurs C1 à C4 présentent un angle d'ouverture en horizontal ⊖ de 270° et un angle d'ouverture en vertical de 1°. Les capteurs avant gauche et droit C1 et C2 sont fixés à une hauteur par rapport au sol à 23 cm ou 30 cm et les capteurs arrière gauche et droit C3 et C4 à une hauteur de 30 cm.

Chaque capteur C1 à C4 est représenté par un secteur de cercle de 270° de centre O1 à 04, symbolisant l'angle d'ouverture en horizontal Θ de chaque capteur C1 à C4. Les centre O1 à O4 coïncident avec les centres « physique » des capteurs C1 à C4.

Les centres O1 et O2 des capteurs avant gauche et droit C1 et C2 sont alignés et tangentent la face avant du véhicule porteur VP qui s'étend suivant l'axe Y, perpendiculairement à l'axe longitudinal XX' du véhicule porteur VP.

Avec une telle implantation des capteurs C1 à C4, les angles d'ouverture Θ des capteurs C1 à C4 définissent des zones de détection autour du véhicule porteur VP dont certaines se chevauchent au moins partiellement une fois ZR2 voire deux fois ZR3 créant ainsi des redondances dans les informations délivrées par les capteurs C1 à C4.

Les capteurs C1 et C2 participent à la définition de cinq zones de détection autour du véhicule porteur VP : deux zones à triple redondance ZR3 correspondant respectivement aux zones avant gauche et droite du véhicule porteur VP, et une première zone à double redondance ZR2 correspondant à la zone avant du véhicule porteur VP comprise entre les deux zones à triple redondance ZR3.

Le capteur C1 participe également, avec le capteur C3, à la définition d'une deuxième zone à double redondance ZR2 et le capteur C2 participe également, avec le capteur C4, à la définition d'une troisième zone à double redondance ZR2.

Les capteurs C3 et C4 définissent respectivement des première et seconde zones sans redondance ZR0 sur les flancs gauche et droit du véhicule porteur VP. Ils participent également à la définition d'une quatrième zone à double redondance ZR2 s'étendant à l'arrière du véhicule porteur VP.

## Revendications

1. Véhicule automobile (VP) équipé d'au moins quatre capteurs anticollisions (C1 à C4), identiques, de type lidar, disposés respectivement aux quatre angles du véhicule (VP), chaque capteur (C1 à C4) possédant un même angle d'ouverture déterminé (Θ) et définissant au moins une zone de détection autour du véhicule (VP), certaines zones de détection pouvant se chevaucher pour créer de la redondance (ZR2, ZR3), **caractérisé en ce que** les deux capteurs avant gauche et droit (C1 et C2) sont positionnés et orientés de manière à ce que leurs zones de détection tangentent le déport (D1, D2) des roues (RA1, RA2) respectivement avant gauche et droite, en considérant l'angle maximal de braquage des roues avant gauche et droite (RA1, RA2), et **en ce que** les deux capteurs arrière gauche et droit (C3 et C4) définissent des zones de détection (ZR0), sans chevauchement avec d'autres zones de détection, sur les flancs respectivement gauche et droit du véhicule (VP) ; les zones de détection sans chevauchement (ZRO) tangentant le déport des roues avant gauche et droite (RA1, RA2) en considérant leur angle de braquage maximal, et
dans lequel les capteurs arrière gauche et droit (C3 et C4) sont positionnés à l'arrière du véhicule (VP) de telle manière que leurs centres (O3, O4) sont en limite du gabarit du véhicule (VP).

2. Véhicule (VP) selon la revendication précédente, **caractérisé en ce que** les capteurs avant gauche et droit (C1 et C2) sont positionnés à l'avant du véhicule (VP) de telle manière que leurs centres (O1 et O2) sont en retrait des flancs respectivement gauche et droit du véhicule (VP), vers l'axe longitudinal (XX') du véhicule (VP).

3. Véhicule (VP) selon la revendication précédente, **caractérisé en ce que** le gabarit du véhicule (VP) présente, vue de dessus, une forme générale rectangulaire et **en ce que** les capteurs arrière gauche et droit (C3 et C4) sont positionnés aux angles du rectangle correspondant aux angles arrière gauche et droit du véhicule (VP), et **en ce que** les capteurs avant gauche et droit (C1 et C2) sont positionné à distance des deux autres angles du rectangle se faisant face.

4. Véhicule selon la revendication précédente, caractérisé en ce il n'y a pas de dépassement latéral des capteurs (C1 à C4) par rapport au gabarit du véhicule (VP) considéré avec les rétroviseurs extérieurs gauche et droit (R1 et R2) déployés.

5. Véhicule selon l'une des revendications précédente, **caractérisé en ce qu'**il est une navette autonome.

## Patentansprüche

1. Kraftfahrzeug (VP), das mit mindestens vier identischen Antikollisionssensoren (C1 bis C4) vom Typ Lidar ausgestattet ist, die jeweils an den vier Ecken des Fahrzeugs (VP) angeordnet sind, wobei jeder Sensor (C1 bis C4) einen gleichen bestimmten Öffnungswinkel (Θ) besitzt und mindestens einen Erfassungsbereich um das Fahrzeug (VP) herum definiert, wobei sich einige Erfassungsbereiche überlappen können, um Redundanz (ZR2, ZR3) zu schaffen, **dadurch gekennzeichnet, dass** die beiden vorderen linken und rechten Sensoren (C1 und C2) so positioniert und ausgerichtet sind, dass ihre Erfassungsbereiche die Einpresstiefe (D1, D2) der Räder (RA1, RA2) jeweils vorne links und rechts tangential berühren, unter Berücksichtigung des maximalen Einschlagwinkels der linken und rechten Vorderräder (RA1, RA2), und dass die beiden linken und rechten hinteren Sensoren (C3 und C4) Erfassungsbereiche (ZRO) ohne Überlappung mit anderen Erfassungsbereichen an der linken bzw. rechten Flanke des Fahrzeugs (VP) definieren ; wobei die nicht überlappenden Erfassungsbereiche (ZRO) die Einpresstiefe des linken und rechten Vorderrads (RA1, RA2) unter Berücksichtigung ihres maximalen Lenkwinkels tangieren, und
wobei der linke und der rechte hintere Sensor (C3 und C4) am Heck des Fahrzeugs (VP) so positioniert sind, dass ihre Zentren (O3, O4) an der Grenze der Begrenzungslinie des Fahrzeugs (VP) liegen.

2. Fahrzeug (VP) nach dem vorhergehenden Anspruch, **dadurch gekennzeichnet, dass** der linke und der rechte vordere Sensor (C1 und C2) an der Vorderseite des Fahrzeugs (VP) so positioniert sind, dass ihre Zentren (O1 und O2) von den linken bzw. rechten Seitenwänden des Fahrzeugs (VP) in Richtung der Längsachse (XX') des Fahrzeugs (VP) zurückgesetzt sind.

3. Fahrzeug (VP) nach dem vorhergehenden Anspruch, **dadurch gekennzeichnet, dass** die Schablone des Fahrzeugs (VP) in der Draufsicht eine allgemein rechteckige Form aufweist und dass der linke und rechte hintere Sensor (C3 und C4) an den Ecken des Rechtecks positioniert sind, die der linken und rechten hinteren Ecke des Fahrzeugs (VP) entsprechen, und dass der linke und rechte vordere Sensor (C1 und C2) in einem Abstand von den beiden anderen Ecken des Rechtecks positioniert sind, die einander gegenüberliegen.

4. Fahrzeug nach dem vorhergehenden Anspruch, **dadurch gekennzeichnet, dass** es keinen seitlichen Überstand der Sensoren (C1 bis C4) in Bezug auf die Umrisslinie des Fahrzeugs (VP) gibt, wenn der linke und rechte Außenspiegel (R1 und R2) ausgeklappt sind.

5. Fahrzeug nach einem der vorhergehenden Ansprüche, **dadurch gekennzeichnet, dass** es ein autonomer Shuttle ist.

## Claims

1. Motor vehicle (VP) equipped with at least four identical anti-collision sensors (C1 to C4) of the lidar type, arranged respectively at the four corners of the vehicle (VP), each sensor (C1 to C4) having the same determined angle of aperture (Θ) and defining at least one detection zone around the vehicle (VP), it being possible for certain detection zones to overlap in order to create redundancy (ZR2, ZR3) **characterized in that** the two front left and right sensors (C1 and C2) are positioned and oriented so that their detection zones tangent the offset (D1, D2) of the front left and right wheels (RA1, RA2) respectively considering the maximum steering angle of the left and right front wheels (RA1, RA2), and **in that** the two left and right rear sensors (C3 and C4) define detection zones (ZR0), without overlapping with other detection zones, on the left and right sides of the vehicle (VP) respectively; the non-overlapping detection zones (ZRO) tangent to the offset of the left and right front wheels (RA1, RA2) considering their maximum steering angle, and
wherein the left and right rear sensors (C3 and C4) are positioned at the rear of the vehicle (VP) in such a way that their centers (O3, O4) are at the limit of the vehicle (VP) gauge.

2. Vehicle (VP) according to the preceding claim, **characterized in that** the left and right front sensors (C1 and C2) are positioned at the front of the vehicle (VP) in such a way that their centers (O1 and O2) are set back from the left and right sides of the vehicle (VP) respectively, towards the longitudinal axis (XX') of the vehicle (VP).

3. Vehicle (VP) according to the preceding claim, **characterized in that** the gauge of the vehicle (VP) has, seen from above, a generally rectangular shape and **in that** the left and right rear sensors (C3 and C4) are positioned at the corners of the rectangle corresponding to the left and right rear corners of the vehicle (VP), and **in that** the left and right front sensors (C1 and C2) are positioned at a distance from the two other corners of the rectangle facing each other.

4. Vehicle according to the preceding claim, **characterized in that** there is no lateral projection of the sensors (C1 to C4) with respect to the gauge of the vehicle (VP) considered with the left and right external mirrors (R1 and R2) deployed.

5. Vehicle according to one of the preceding claims, **characterized in that** it is an autonomous shuttle.
